# EUROPÄISCHE PATENTSCHRIFT

(11) **EP 0 523 824 B1**
(45) Veröffentlichungstag und Bekanntmachung des Hinweises auf die Patenterteilung: **22.02.1995**
(21) Anmeldenummer: 92250191.1
(22) Anmeldetag: 17.07.1992
(51) Int. Cl.: B60C 27/16

(54) **Gleitschutzelement für Gleitschutzvorrichtungen für Fahrzeugräder**
Anti-skid element for anti-skid devices for vehicle wheels
Elément antidérapant pour dispositifs antidérapants de roues automobiles

(30) Priorität: 18.07.1991 DE 4124117
(43) Veröffentlichungstag der Anmeldung: 20.01.1993
(73) Patentinhaber: RUD-Kettenfabrik Rieger & Dietz GmbH u. Co., D-73406 Aalen (DE)
(72) Erfinder: Zeiser, Peter, Dipl.-Ing., W-7080 Aalen Wasseralfingen (DE)
(74) Vertreter: Böning, Manfred, Dr.-Ing.

(56) Entgegenhaltungen:
- DE-A- 3 722 903
- FR-A- 342 846
- GB-A- 20 559

## Beschreibung

Die Erfindung betrifft ein Gleitschutzelement für Gleitschutzvorrichtungen für Fahrzeugräder mit einem Grundkörper aus biegsamem Material, der Stollen und/oder Spikes aufweist und an seinen sich gegenüberliegenden Enden mit von Haken gebildeten Anschlußorganen für jeweils ein Kettenglied versehen ist.

Ein Gleitschutzelement der vorstehenden Art ist aus der DE-PS 37 22 903 bekannt. Es eignet sich insbesondere zur Herstellung von Gleitschutzvorrichtungen, deren Laufnetz - wie im DE-GM 87 09 545.9 beschrieben - einen geschlossenen Ring veränderbaren Umfanges bildet. Bei dem bekannten Gleitschutzelement sind zum Anschluß von Kettengliedern verkürzbarer Kettenstrangabschnitte dienende Haken formschlüssig in die vorzugsweise aus Polyurethan bestehenden Grundkörper der Gleitschutzelemente eingebettet. Um eine einwandfreie Verriegelung des in jeweils einen Haken eingehängten Kettengliedes auch unter ungünstigen Betriebsbedingungen zu gewährleisten, wird die Hakenöffnung nach dem Einhängen des Kettengliedes in den Haken durch eine quer zur Hakenebene angeordnete Schraube mit Steilgewinde geschlossen. Die Handhabung der Schraube setzt nicht nur die Verwendung eines Werkzeuges voraus, sondern sie ist auch zeitaufwendig und wird insbesondere unter wintermäßigen Bedingungen als lästig empfunden. Hinzu kommt, daß das Einbetten der Haken in den Grundkörper die Herstellung der Gleitschutzelemente insbesondere in Fällen erschwert, in denen große im Laufnetz wirksame Längskräfte eine hinreichend feste Verankerung der Haken im Grundkörper des Gleitschutzelementes erfordern.

Der Erfindung liegt die Aufgabe zugrunde, ein Gleitschutzelement der in Betracht gezogenen Art zu schaffen, dessen Anschlußstellen für anzuschließende Kettenglieder die Übertragung großer Kräfte gestatten und bequem handhabbar sind. Diese Aufgabe wird bei einem gattungsgemäßen Gleitschutzelement erfindungsgemäß dadurch gelost, daß mindestens ein Teil der Haken um einen im Grundkörper gelagerten Querbolzen schwenkbar in einem vom Querbolzen überbrückten Schlitz geführt ist und daß die Seitenwände des Schlitzes die Hakenöffnung bei in die Ebene des Gleitschutzelementes geschwenktem Haken sperren, während sie sie bei aus der Ebene des Gleitschutzelementes herausgeschwenktem Haken freigeben.

Die beidseits des Schlitzes zur Aufnahme des Hakens im Grundkörper des Gleitschutzelementes gelagerten Enden des Querbolzens bieten die Gewähr für eine feste Verankerung des Hakens am Grundkörper, während die Schwenkbarkeit des Hakens um den Querbolzen das Ein- bzw. Aushängen des jeweiligen Anschlußkettengliedes erleichtert. Die Sicherheit sowohl gegen ein Ausreißen des Hakens aus dem Grundkörper als auch gegen ein ungewolltes Lösen der in die Haken jeweils eingehängten Kettenglieder ist groß.

Weitere Einzelheiten und Merkmale der Erfindung ergeben sich aus den Unteransprüchen und der nachstehenden Beschreibung eines in der beigefügten Zeichnung dargestellten, besonders vorteilhaften Ausführungsbeispieles. Es zeigen:
Fig. 1 die Draufsicht auf ein Gleitschutzelement,
Fig. 2 einen Schnitt längs der Linie II-II in Fig. 1 und
Fig. 3 einen modifizierten Haken für das Gleitschutzelement gemäß den Figuren 1 und 2.

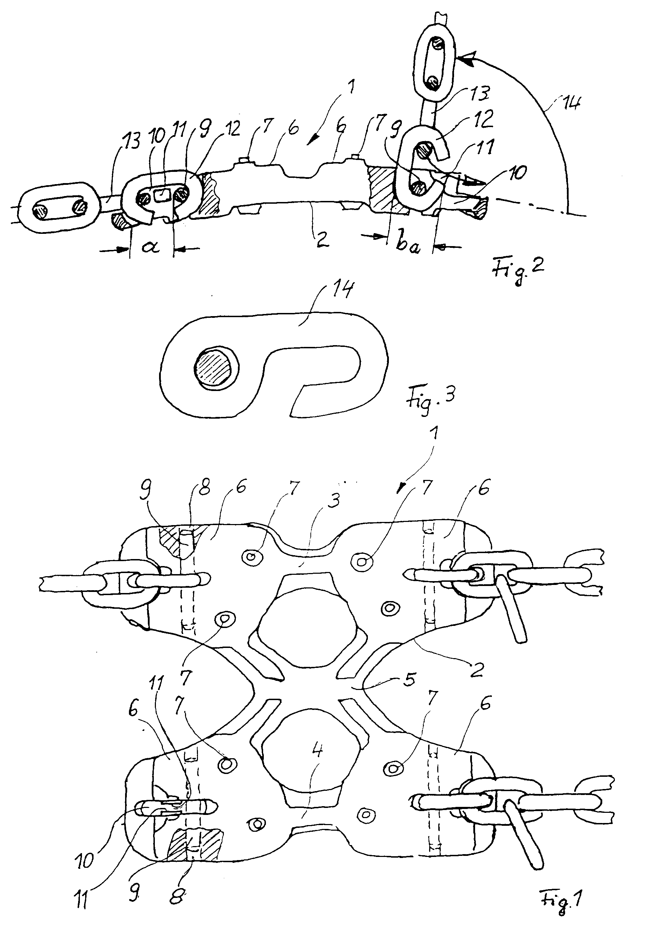

In den Figuren ist mit 1 allgemein ein Gleitschutzelement bezeichnet, dessen Grundkörper 2 aus zwei Längsstücken 3 und 4 und einem diese miteinander verbindenden X-förmigen Abstandshalter 5 besteht. Beide Längsstücke 3 und 4 weisen Stollen 6 und in diese eingebettete Spikes 7 auf. Im Bereich der Enden der Längsstücke 3 und 4 sind diese mit Querbohrungen zur Aufnahme von Querbolzen 9 versehen. Die Querbolzen 9 überbrücken einen Schlitz 10, in den Rastnocken 11 zur Arretierung eines Hakens 12 in der Schließstellung ragen. Der Schlitz 10 ist an der Unterseite des Gleitschutzelementes 1 an seinen beiden Enden geschlossen, an dessen Oberseite und zwischen Ober- und Unterseite dagegen an seinem dem anzuschließenden Kettenglied 13 zugewandten Ende offen. Die Haken 12 sind im dargestellten Fall als offene Kettenglieder ausgebildet. Dies bedeutet, daß als Haken sogenannte offene Ersatzglieder verwendet werden können, die als serienmäßige Massenteile zur Verfügung stehen. Naturgemäß ist es auch möglich, einen als Stanzteil ausgebildeten modifizierten Haken 14 zu verwenden, wie er in Figur 3 dargestellt ist.

Der Abstand a zwischen den Querbolzen 9 und dem dem in den als Doppelhaken ausgebildeten Haken 12 einzuhängenden Kettenglied 13 zugewandten Schlitzende ist im wesentlichen gleich der äußeren Breite bₐ des Hakens 9. Dies bedeutet, daß der Haken nach einer entsprechenden Schwenkbewegung bei Bedarf in seiner Gesamtheit auswechselbar ist.

Der linken Seite der Figur 2 kann entnommen werden, daß die Öffnung des Hakens 12 in der Schließstellung des Hakens zur Unterseite des Gleitschutzelementes gerichtet ist und mithin die Wände des Schlitzes 10 ein Ein- bzw. Aushängen des Kettengliedes 13 verhindern. In der rechten Seite der Figur 2 ist demgegenüber die Position des Hakens 12 gezeigt, in der die Hakenöffnung frei zugänglich ist und mithin ein Kettenglied 13 in den Haken 12 aus- und eingehängt werden kann.

Das Einstellen der Gleitschutzvorrichtung auf die dem Reifenumfang angepaßte Länge erfolgt normalerweise im nicht montierten Zustand. Um das Laufnetz zu verkürzen, d.h. den Haken 12 zu öffnen, schwenkt man ihn durch Zug an dem an den jeweiligen Haken 12 angeschlossenen Kettenstrang in Richtung des Pfeiles 14 nach oben. Dabei wird der Druckpunkt der Rastnocken 11 überwunden. Nach erfolgtem Verkürzen üblicherweise um ein Kettenglied wird der Haken 12 durch Ziehen am entsprechenden Kettenabschnitt in die Gegenrichtung wieder in die Schließstellung gebracht.

## Patentansprüche

1. Gleitschutzelement (1) für Gleitschutzvorrichtungen für Fahrzeugräder mit einem Grundkörper (2) aus biegsamem Material, der Stollen (6) und/oder Spikes (7) aufweist und an seinen sich gegenüberliegenden Enden mit von Haken (12) gebildeten Anschlußorganen für jeweils ein Kettenglied (13) versehen ist, **dadurch gekennzeichnet**, daß mindestens ein Teil der Haken(12) um einen im Grundkörper (2) gelagerten Querbolzen (9) schwenkbar in einem vom Querbolzen (9) überbrückten Schlitz (10) geführt ist und daß die Seitenwände des Schlitzes (10) die Hakenöffnung bei in die Ebene des Gleitschutzelementes (1) geschwenktem Haken (12) sperren, während sie sie bei aus der Ebene des Gleitschutzelementes (1) herausgeschwenktem Haken (12) freigeben.

2. Gleitschutzelement nach Anspruch 1, **dadurch gekennzeichnet,** daß der Schlitz (10) an der Unterseite des Gleitschutzelementes (1) an seinen beiden Enden geschlossen, an dessen Oberseite und zwischen Ober- und Unterseite dagegen an seinem dem anzuschließenden Kettenglied (13) zugewandten Ende offen ist.

3. Gleitschutzelement nach Anspruch 1 oder 2, **dadurch gekennzeichnet,** daß ein den Schlitz (10) an der Unterseite des Gleitschutzelementes begrenzender Abschnitt des Gleitschutzelementes (1) eine Auflage für einen Teil des in den jeweiligen Haken (12) eingehängten Kettengliedes (13) bildet.

4. Gleitschutzelement nach einem der Ansprüche 1 bis 3, **dadurch gekennzeichnet,** daß in den Schlitz (10) mindestens ein zur Arretierung des Hakens (12) in seiner Schließstellung dienender elastischer Rastnocken (11) ragt.

5. Gleitschutzelement nach einem der Ansprüche 1 bis 4, **dadurch gekennzeichnet,** daß die Haken (12) als Doppelhaken ausgebildet sind.

6. Gleitschutzelement nach Anspruch 4, **dadurch gekennzeichnet,** daß die Haken (12) als offene Kettenglieder ausgebildet sind.

7. Gleitschutzelement nach Anspruch 5 oder 6, **dadurch gekennzeichnet,** daß die Haken (12) ohne Lösen des Querbolzens (9) auswechselbar sind.

8. Gleitschutzelement nach einem der Ansprüche 5 bis 7, **dadurch gekennzeichnet,** daß der Abstand (a) zwischen dem Querbolzen (9) und dem dem in den Haken (12) einzuhängenden Kettenglied (13) zugewandten Schlitzende im wesentlichen gleich der äußeren Breite (bₐ₎ des Hakens (12) ist.

9. Gleitschutzelement nach einem der Ansprüche 1 bis 8, **dadurch gekennzeichnet,** daß die Öffnung des Hakens (12) in der Schließstellung des Hakens (12) zur Unterseite des Gleitschutzelementes (1) gerichtet ist.

10. Gleitschutzelement nach einem der Ansprüche 1 bis 9, **dadurch gekennzeichnet,** daß es Anschläge zur Abstützung des Bugbereiches des in den jeweiligen Haken (12) eingehängten Kettengliedes (13) aufweist.

11. Gleitschutzelement nach einem der Ansprüche 1 bis 10, **dadurch gekennzeichnet,** daß sein Grundkörper (2) zwei im Bereich der Reifenschultern zu liegen kommende, die Stollen (6) bzw. Stollen (6) und Spikes (7) tragende, durch einen Abstandshalter (5) miteinander verbundene Längsstücke (3,4) aufweist und daß die Haken (12) jeweils im wesentlichen fluchtend zu den Längsstücken (3,4) ausgerichtet sind.

## Claims

1. Anti-skid element (1) for anti-skid devices for vehicle wheels, having a main body (2), made from flexible material, which exhibits lugs (6) and/or spikes (7) and is provided, at its mutually opposing ends, with connecting members, formed by hooks (12), for a respective chain link (13), characterized in that at least a part of the hooks (12) is guided, pivotably about a cross-bolt (9) mounted in the main body (2), in a slot (10) bridged by the cross-bolt (9), and in that the side walls of the slot (10) shut off the hook opening when the hook (12) is swivelled into the plane of the anti-skid element (1), whereas they expose it when the hook (12) is swivelled out of the plane of the anti-skid element (1).

2. Anti-skid element according to Claim 1, characterized in that the slot (10), on the bottom side of the anti-skid element (1), is closed at its two ends, whereas on the top side of the said anti-skid element and between the top and bottom sides it is open at its end facing the chain link (13) to be connected.

3. Anti-skid element according to Claim 1 or 2, characterized in that a portion of the anti-skid element (1), which portion limits the slot (10) on the bottom side of the anti-skid element, forms a rest for a part of the chain link (13) hung in the respective hook (12).

4. Anti-skid element according to one of Claims 1 to 3, characterized in that projecting into the slot (10) there is at least one elastic latching cam (11) serving to detain the hook (12) in its closed setting.

5. Anti-skid element according to one of Claims 1 to 4, characterized in that the hooks (12) are configured as double hooks.

6. Anti-skid element according to Claim 4, characterized in that the hooks (12) are configured as open chain links.

7. Anti-skid element according to Claim 5 or 6, characterized in that the hooks (12) are able to be exchanged without the release of the cross-bolt (9).

8. Anti-skid element according to one of Claims 5 to 7, characterized in that the distance (a) between the cross-bolt (9) and the slot end facing the chain link (13) to be hung in the hook (12) is essentially equal to the outer width (bₐ) of the hook (12).

9. Anti-skid element according to one of Claims 1 to 8, characterized in that the opening of the hook (12) is directed, in the closed setting of the hook (12), towards the bottom side of the anti-skid element (1).

10. Anti-skid element according to one of Claims 1 to 9, characterized in that it exhibits stops for supporting the bow region of the chain link (13) hung in the respective hook (12).

11. Anti-skid element according to one of Claims 1 to 10, characterized in that its main body (2) exhibits two longitudinal pieces (3, 4), which come to lie in the region of the tyre shoulders, bear the lugs (6) or lugs (6) and spikes (7) and are joined together by a spacer (5), and in that the hooks (12) are aligned, in each case, essentially flush with the longitudinal pieces (3, 4).

## Revendications

1. Elément antidérapant (1) pour dispositifs antidérapants de roues de véhicule fait d'un corps principal (2) en matériau déformable qui est muni de crampons (6) et/ou de tétons (7) et qui est pourvu à chacune de ses extrémités opposées d'organes de raccordement à crochet (12) pour un maillon de chaîne (13), élément caractérisé en ce que au moins une partie d'un crochet (12) est logée dans une fente (10) et est montée basculante sur une cheville (9) disposée dans le corps principal (2) au travers de la fente (10), et en ce que les parois latérales de la fente (10) sont telles qu'elles entravent l'ouverture du crochet lorsque ce dernier (12) est basculé dans le plan de l'élément antidérapant (1) et qu'elles libèrent cette ouverture lorsque ce crochet (12) est basculé en dehors du plan de l'élément antidérapant.

2. Elément antidérapant selon la revendication 1 caractérisé en ce que la fente (10) est configurée de manière à être fermée à ses deux extrémités sur la face inférieure de l'élément antidérapant (1) et de manière à être ouverte à son extrémité orientée vers le maillon de chaîne (13) de raccordement, sur sa face supérieure et entre ses faces supérieure et inférieure.

3. Elément antidérapant selon la revendication 1 ou 2, caractérisé en ce qu'un support est ménagé sur une partie délimitant la fente (10) à la face inférieure de l'élément antidérapant pour une partie du maillon de chaîne accroché au crochet (12) correspondant.

4. Elément antidérapant selon l'une des revendications 1 à 3, caractérisé en ce qu'au moins un ergot d'arrêt (11) élastique fait saillie dans la fente (10) pour immobiliser le crochet (12) en position de fermeture.

5. Elément antidérapant selon l'une des revendications 1 à 4, caractérisé en ce que les crochets (12) sont des crochets doubles.

6. Elément antidérapant selon la revendication 4, caractérisé en ce que les crochets (12) sont des maillons de chaîne ouverts.

7. Elément antidérapant selon la revendication 5 ou 6 caractérisé en ce que les crochets (12) sont amovibles sans jeu de la cheville (9).

8. Elément antidérapant selon l'une des revendications 5 à 7, caractérisé en ce que la distance (a) entre la cheville (9) et l'extrémité de la fente orientée vers le crochet (12) auquel est accroché un maillon de chaîne (13), est pratiquement égale à la largeur extérieure (bₐ) du crochet (12).

9. Elément antidérapant selon l'une des revendications 1 à 8, caractérisé en ce que l'ouverture du crochet (12) lorsqu'il est en position de fermeture, est dirigée vers la face inférieure de l'élément antidérapant (1).

10. Elément antidérapant selon l'une des revendications 1 à 9, caractérisé en ce qu'il est prévu des butoirs pour délimiter la course angulaire du maillon de chaîne (13) accroché au crochet (12) correspondant.

11. Elément antidérapant selon l'une des revendications 1 à 10, caractérisé en ce que son corps principal (2) comprend deux parties longitudinales (3, 4) reliées l'une à l'autre par une entretoise (5) dans la zone destinée à venir au contact de l'épaulement du pneu, portant des crampons (6) et/ou des tétons (7) et en ce que les crochets (12) sont pratiquement dans l'alignement des parties longitudinales (3, 4) correspondantes.
